# EUROPÄISCHE PATENTSCHRIFT

(11) **EP 1 941 182 B1**
(45) Veröffentlichungstag und Bekanntmachung des Hinweises auf die Patenterteilung: **25.04.2012**
(21) Anmeldenummer: 06793274.9
(22) Anmeldetag: 06.09.2006
(51) Int. Cl.: F16H 7/08

(54) **FÜHRUNGSEINHEIT FÜR EINEN ZUGMITTELTRIEB**
GUIDING UNIT FOR A TRACTION MECHANISM DRIVE
UNITE DE GUIDAGE POUR MECANISME DE TRACTION

(30) Priorität: 21.10.2005 DE 102005050531
(43) Veröffentlichungstag der Anmeldung: 09.07.2008
(73) Patentinhaber: Schaeffler Technologies AG & Co. KG, 91074 Herzogenaurach (DE)
(72) Erfinder: FUHRMANN, Rainer, 91344 Waischenfeld / Nankendorf (DE); KROON, Bert, 91052 Erlangen (DE)
(86) Internationale Anmeldenummer: PCT/EP2006/066073
(87) Internationale Veröffentlichungsnummer: WO 2007/045524

(56) Entgegenhaltungen:
- WO-A2-2004/094866
- DE-A1- 19 923 923
- DE-U1- 8 129 447
- DE-U1- 20 102 748
- GB-A- 861 741
- US-A- 5 597 367
- US-A- 5 720 683
- US-A1- 2002 002 090

## Beschreibung

### Gebiet der Erfindung

Die vorliegende Erfindung bezieht sich auf einen Zugmitteltrieb, insbesondere ausgebildet als Kettentrieb einer Brennkraftmaschine, der auch als Synchrontrieb zu bezeichnen ist. Dieser Zugmitteltrieb umfasst zumindest ein antreibendes Rad und zumindest ein angetriebenes Rad, die über ein Zugmittel verbunden sind. Weiterhin schließt der Zugmitteltrieb eine kraftbeaufschlagte Führungseinheit ein, die an zumindest zwei voneinander getrennten Bereichen mit dem Zugmittel zusammenwirkt.

### Hintergrund der Erfindung

Derartige Zugmitteltriebe werden an Brennkraftmaschinen bevorzugt zum Antrieb einer oder mehrerer Nockenwellen eingesetzt. Der Nockenwellenantrieb einer Brennkraftmaschine erfordert einen synchronen Antrieb zwischen der Abtriebswelle und der Antriebswelle, der eine Phasentreue, d.h. übereinstimmende Drehzahl zwischen der Kurbelwelle und der Nockenwelle der Brennkraftmaschine in allen Betriebszuständen sicherstellt. Als Zugmitteltrieb werden dazu in heutigen Brennkraftmaschinen bevorzugt Kettentriebe oder Zahnriementriebe eingesetzt. Alternativ werden derartige Zugmitteltriebe für Aggregatetriebe vorgesehen, mit denen beispielsweise der Generator, die Wasserpumpe und der Klimakompressor einer Brennkraftmaschine angetrieben wird.

Die Funktion eines als Synchronantrieb ausgelegten Zugmitteltriebs erfordert eine ausreichend vorgespanntes Zugmittel, wodurch ein nachteiliger Zahnsprung unterbunden werden kann. Dazu ist es beispielsweise bekannt, ein hydraulisch wirkendes oder von einem Federmittel beaufschlagtes Spannsystem einzusetzen, die eine kraftschlüssig an dem Zugmittel abgestützte Spannrolle oder Spannschiene einschließt. Zusätzlich zu einem ausreichend vorgespannten Zugmittel hat das Spannsystem weiterhin die Aufgabe, beispielsweise durch Verschleiß oder durch Temperaturänderungen bedingte Längenänderungen des Zugmittels auszugleichen.

Ein Zugmitteltrieb, bei dem das Spannsystem nur einem Bereich, bevorzugt dem Leertrum des Zugmittels zugeordnet ist, verursacht nachteilig eine Verdrehung, verbunden mit einem Phasenfehler zwischen den funktionsbedingt synchronisiert umlaufenden Wellen. Aufgrund des sich einstellenden, die Abgasqualität der Brennkraftmaschine nachteilig beeinflussenden Phasenfehlers, sind derartige Spannsysteme für heutige Brennkraftmaschinen nicht geeignet.

Die gattungsgemäße 5,597,367 zeigt eine Vorrichtung, bei der die beiden mit Führungsschuhen verbundene Kolben entgegen der Spannrichtung elastisch nachgiebig gelagert sind. Infolge dieser doppeltwirkenden Ausbildung werden die Schläge des Endlostriebes und damit der Verschleiß des primärseitigen Antriebselementes, d. h. des die Kurbelwelle mit der Nockenwelle verbindenden Zahnriemens, vermieden. Treten während des Betriebes der Vorrichtung dennoch Schläge im Endlostrieb auf, dann können die Kolben elastisch nachgeben, so dass die an den Kolben befestigten Spannschuhe keinem erhöhten Verschleiß unterliegen. Infolge der federnden Dämpfung der Schläge wird auch die gesamte Vorrichtung weniger stark beansprucht, so dass eine lange Lebensdauer gewährleistet ist. Infolge der elastisch nachgiebigen Lagerung werden die Kolben stets wieder in ihre Spannstellung belastet, so dass die Spannung des Endlostriebes nicht beeinträchtigt wird.

Aus der US 6 358 169 D1 ist ein Kettenspannsystem mit einem drehbaren Spannarm bekannt, der gleichzeitig über zwei separate Spann- oder Führungsarme auf die Kette einwirkt. Dieser Aufbau soll in einem Abschnitt der Kette auftretende Schwingungen oder Vibrationen dämpfen, in dem über den Spannarm eine Übertragung von Schwingungen auf einen weiteren Abschnitt der Kette erfolgt. Nachteilig zeigt dieser Aufbau eine Vorrichtung bei dem sowohl die Spannschiene als auch ein Federmittel außerhalb des Zugmitteltriebs angeordnet sind, wodurch sich der erforderliche Bauraum nachteilig erhöht.

In der DE 26 55 102 A1 ist ein Spannsystem für eine Zugmitteltrieb dargestellt und beschrieben, das in zwei voneinander getrennten Positionen auf das Zugmittel einwirkt. Ein erster drehbarer Spannarm ist endseitig mit einer Laufrolle versehen, die im Betriebszustand kraftschlüssig auf das Zugmittel einwirkt. An dem von der Spannrolle abgewandten Ende ist der Spannarm weiterhin mit einer drehbar gelagerten Führungsschiene verbunden, die einem weiteren Trumabschnitt des Zugmittel zugeordnet ist. Dieses bekannte Spannsystem erfordert einen großen Bauteileumfang, verbunden mit einem erhöhten Baurraumbedarf, wobei einzelne Bauteile des Spannsystems außerhalb des Zugmitteltriebs angeordnet sind.

Die JP 2001 317 600 A offenbart ein Spannsystem mit zwei einstückig miteinander verbundenen Spannarmen. Die um eine gemeinsame Drehachse schwenkbaren Spannarme sind dabei über Führungsflächen an zwei getrennten Abschnitten des Zugmittels kraftschlüssig abgestützt. Dabei greifen beide Spannarme des Spannsystems außenseitig auf das Zugmittel.

### Aufgabe der Erfindung

Der vorliegenden Erfindung liegt die Aufgabe zugrunde, eine kompakte Vorrichtung zu schaffen, mit dem das Zugmittel eines Zugmitteltriebs in allen Betriebszuständen optimal geführt werden kann, verbunden mit einer Reduzierung von Kraftspitzen im Zugmitteltrum.

### Zusammenfassung der Erfindung

Diese Problemstellung wird gemäß der Erfindung durch eine Führungseinheit gelöst, die bevorzugt ein Spannelement und vorzugsweise zumindest ein Führungselement umfasst, die getrennten Bereichen des Zugmittels zugeordnet und über ein gemeinsames Gehäuse miteinander verbunden sind. Im Betriebszustand des Zugmitteltriebs ist das Führungselement vorzugsweise einen Zugtrum und das Spannelement bevorzugt dem Leertrum des Zugmittels zugeordnet, wobei das Führungselement über eine Drehachse schwenkbar mit dem Gehäuse verbunden ist, und das Spannelement über eine Linearführung gegenüber dem Gehäuse verstellbar ist. Alternativ schließt die Erfindung eine ausschließlich Führungselemente oder Spannelemente umfassende Führungseinheit ein. Weiterhin ist für die erfindungsgemäße Führungseinheit im Betriebszustand eine getrennte Verstellung der einzelnen Elemente vorgesehen, wozu diese Elemente von getrennten mechanischern oder hydraulischen Federmitteln kraftbeaufschlagt werden. Dazu sind die Federmittel jeweils zwischen dem Gehäuse oder einem mit der Führungseinheit in Verbindung stehenden Bauteil oder Gegenstück und den einzelnen Elementen positioniert. Durch die Erfindung wird das Zugmittel in allen Betriebszuständen optimal geführt und / oder vorgespannt, wobei sich gleichzeitig Kraftspitzen im Zugmittel, insbesondere im Zugtrum reduzieren.

Die auch als Motion Modul zu bezeichnende erfindungsgemäße Führungseinheit mit jeweils beweglich oder verstellbar zugeordneten, kraftbeaufschlagten Elementen, dem Führungs- und dem Spannelement ermöglich eine vorteilhafte Kompensation oder Reduzierung von im Zugmittel auftretenden Kraftspitzen, was sich vorteilhaft auf den Verschleiß, das Geräusch sowie die Lebendauer auswirkt.

Die erfindungsgemäße Führungseinheit ermöglicht eine optimale Vorspannung und Führung des Zugmittels, ohne das es dabei zu einer nachteiligen Phasenverschiebung zwischen der anzutreibenden und der angetriebenen Welle des Zugmitteltriebs kommt. Die Erfindung nimmt weiterhin Einfluß auf die Vorspannung des Zugmittels, die sich vorteilhaft reduziert und damit gleichfalls die Zugmittelkraft. Da die Zugmittelkraft unmittelbar die Dauerfestigkeit beeinflußt, erhöht die Anwendung der erfindungsgemäßen Führungseinheit die Lebensdauer des gesamten Zugmitteltriebs.

Die kompakte Bauform der erfindungsgemäßen Führungseinheit unterstreichend, umfasst diese alle Bauteile, wie das Gehäuse, die schwenkbaren bzw. verstellbaren Führungselemente, sowie die zugehörigen Federmittel. Aufgrund der vorzugsweise jeweils innenseitig dem Zugmittel zugeordneten Führungselemente der Führungseinheit wird die Montage vereinfacht, insbesondere die Zugmittelmontage, wodurch sich ein weiterer Kostenvorteil der erfindungsgemäßen Führungseinheit einstellt.

Weitere vorteilhafte Ausgestaltungen der Erfindung sind Gegenstand der abhängigen Ansprüche 2 bis 10.

Zur Erzielung eines Gewichtsvorteils der erfindungsgemäßen Führungseinheit, sind die Bauteile, das Gehäuse, das Führungselement sowie das Spannelement aus Aluminium hergestellt. Dieser Werkstoff verringert außerdem den erforderlichen Aufwand für eine mechanische Nacharbeit, wodurch sich ein weiterer Kostenvorteil einstellt. Als ein geeigneter Alternativwerkstoff für die einzelnen Bauteile der Führungseinheit ist Kunststoff einsetzbar.

Alternativ dazu schließt die Erfindung eine Führungseinheit ein, bei dem das Führungselement und / oder das Spannelement mit aus Kunststoff hergestellten Führungsschuhen kombiniert sind. Durch die Auswahl eines entsprechenverschleißfesten Kunststoffs ermöglicht dieser Aufbau eine höhere Lebensdauer sowie einen Vorteil hinsichtlich der Geräuschentwicklung des Zumitteltriebs.

Die Erfindung schließt außerdem eine Führungseinheit ein, deren Bauteile, Gehäuse, Führungselement und Spannelement aus unterschiedlichen Kunststoffen oder Werkstoffen hergestellt sind. Dazu bietet es sich an, für die einzelnen Bauteile in Anbetracht der jeweiligen Beanspruchung zur Erzielung einer optimalen Verschleißbeständigkeit und Festigkeit und geringer Kosten die Werkstoffauswahl vorzunehmen. Eine beispielhafte Auslegung sieht eine beliebige Kombination von aus Aluminium und Kunststoff hergestellten Bauteilen der Führungseinheit vor.

Vorteilhaft kann der erfindungsgemäße Aufbau der Führungseinheit durch weitere Komponenten ergänzt werden, um beispielsweise die Führung oder Vorspannung des Zugmittels eines Zugmitteltriebs zu verbessern. Dazu kann die Führungseinheit beispielsweise mehr als ein Führungselement und / oder mehr als ein Spannelement umfassen, die unmittelbar Einfluss auf die Vorspannung und die Dämpfung des Zugmittels nehmen. Dazu bietet es sich an, dass einzelne Elemente der Führungseinheit in getrennten Abschnitten des Leertrums oder des Zugtrums dem Zugmittel zugeordnet sind.

Alternativ zu einer schwenkbaren Verstellung des Spannelementes oder des Führungselementes bietet sich gemäß der Erfindung weiterhin eine linear verschiebbare Anordnung an.

Bevorzugt wird das Spannelement linear verstellt. Zur Darstellung einer kostengünstigen Linearführung eignet sich bevorzugt ein im Spannelement lagefixierter Stift, der in einer korrespondierenden Bohrung des Gehäuses verschiebbar ist. Die vorzugsweise axial zu einem Federmittel der Führungsschiene angeordnete Linearführung, bildet dabei gleichzeitig eine Verdrehsicherung des Führungselementes.

Gemäß einem bevorzugten Aufbau der Führungseinheit ist die Drehachse und das Federmittel getrennten Enden des Spannelementes zugeordnet. Alternativ schließt die Erfindung die Anordnung von Federmitteln mit hoher Stellkraft ein, die in einem geringen Abstand zur Drehachse positioniert sind.

Als Kraftmittel eignet sich vorteilhaft eine zylindrische Schraubendruckfeder. Dabei ist ein erstes Federende der Schraubendruckfeder vorzugsweise in einer Bohrung des Gehäuses und das weitere Federende in einer korrespondiereten Bohrung des Spannelementes oder des Führungselementes zentriert. Diese Maßnahme verhindert ein nachteiliges Ausknicken der Schraubendruckfeder. Eine Führungseinheit, bei der die Einzelteile, das Gehäuse, das Führungselement und das Spannelement aus Aluminium hergestellt sind, kann erfindungsgemäß Stahlscheiben einschließen, über sich die Enden der Schraubendruckfeder in den Bohrungen abstützen. Diese Maßnahme verringert vorteilhaft die Flächenpressung im Abstützbereich der Schraubendruckfeder.

Die Verstellung der einzelnen Elemente der Führungseinheit ist weiterhin mittels elektrischer Energie, z. B. mit einem Stellmotor oder über den Öldruck einer Druckumlaufschmierung der Brennkraftmaschine möglich. Alternativ bietet es sich gemäß der Erfindung außerdem an, als Kraftmittel ein hydraulisch wirkendes Stellglied oder Stellzylinder einzusetzen. Eine Ansteuerung zur Beaufschlagung der Führungseinheit mit dem Öldruck der Brennkraftmaschine umfasst vorteilhaft ein hydraulisches Stellglied, bestehend aus einem hydraulisch beaufschlagten, mit dem Spannelement oder dem Führungselement verbundenen Kolben. Die Funktion des Stellgliedes verbessernd, schließt dieses zwischen einem hydraulischen Hochdruck- und Vorratsraum ein Einwegventil ein. Durch diese Maßnahme kann eine gewünschte gedämpfte Anlenkung des mit dem hydraulisch beaufschlagten Kolben verbundenen Elementes erzielt werden. Zur Verstellung des Kolbens strömt das Hydraulikfluid von dem Hochdruckraum über das Einwegventil in den Vorratsraum. Ein umgekehrter verzögerter Volumenaustausch kann über einen Leckspalt erfolgen, der zwischen dem Hochdruckraum und dem Vorratsraum vorgesehen ist. Als Einwegventil wird bevorzugt ein Ventileinheit eingesetzt, bestehend aus einer federkraftbeaufschlagten Kugel, die in der ersten Strömungsrichtung einen Querschnitt schließt und in der umgekehrten Richtung, nach Überwindung der Federkraft öffnet.

Im Einbauzustand stellt sich vorteilhaft eine Übereinstimmung zwischen einer Stichbohrung der Führungseinheit und einer Bohrung der Brennkraftmaschine ein, wodurch das Hydraulikfluid, das Schmieröl aus einer Ölgalerie der Brennkraftmaschine, unmittelbar den Hochdruckraum des hydraulisches Stellgliedes beaufschlagt.

Als wirksame Maßnahme, um die Geräuschentwicklung der Führungseinheit zu eliminieren, ist dem Spannelement und / oder dem Führungselement ein elastischer Endanschlag zugeordnet. Dazu eignet sich ein als Gummi- oder Kunststoffstopfen ausgebildetes, in eine Sacklochbohrung eingesetztes Bauteil, das mit einem Überstand gegenüber einer Anlagefläche hervortritt. Dieses Bauteil kann dabei beliebig dem Gehäuse oder dem Spannelement bzw. Führungselement zugeordnet werden. Der elastische Endanschlag verhindert wirksam eine Anlage des verstellbaren Elementes an dem Gehäuse. Insbesondere bei einem durch Schwingungen angeregter Zugmitteltrieb, bei dem das Spannelement und / oder das Führungselement hochfrequent schwingt, verhindert der elastische Endanschlag ein nachteiliges Anschlagen von dem beweglichen Element an dem Gehäuse.

Die Erfindung umfasst außerdem eine Führungseinheit, deren Spannelement und / oder Führungselement unmittelbar oder einem diesen Bauteilen zugeordneter Führungsschuh beidseitig Borde einschließt. Die axial beabstandeten, jeweils an den Außenseiten sich über die gesamte Länge erstreckenden Borde verbessern die Führung des Zugmittels im Bereich der Führungselemente.

Weiterhin ist die erfindungsgemäße Führungseinheit mit einer Verliersicherung bzw. einer Montagesicherung versehen. Diese Versicherung gewährleistet eine enge Anlage der verstellbaren Elemente an dem Gehäuse bzw. an dem elastischen Endanschlag. Gleichzeitig vereinfacht die Sicherung die Montage, insbesondere das Auflegen des Zugmittels und gewährleistet anderseits einen Zusammenhalt aller zugehörigen Bauteile der Führunseinheit während des Transportes.

Das Gehäuse der erfindungsgemäßen Führungseinheit ist außerdem mit für Befestigungschrauben bestimmten Bohrungen versehen, mit denen die Führungseinheit beispielsweise an dem Kurbelgehäuse einer Brennkraftmaschine lösbar befestigt werden kann.

### Kurze Beschreibung der Zeichnungen

Ausführungsbeispiele von erfindungsgemäßen Einheiten sind in den Figuren dargestellt, die nachfolgend näher beschrieben werden. Es zeigen:
- Figur 1:: in eine Perspektive den Aufbau einer Führungseinheit gemäß der Er findung;
- Figur 2:: die Führungseinheit gemäß Figur 1, in der zur Verdeutlichung einzelne Details im Schnitt dargestellt sind;

### Ausführliche Beschreibung der Zeichnungen

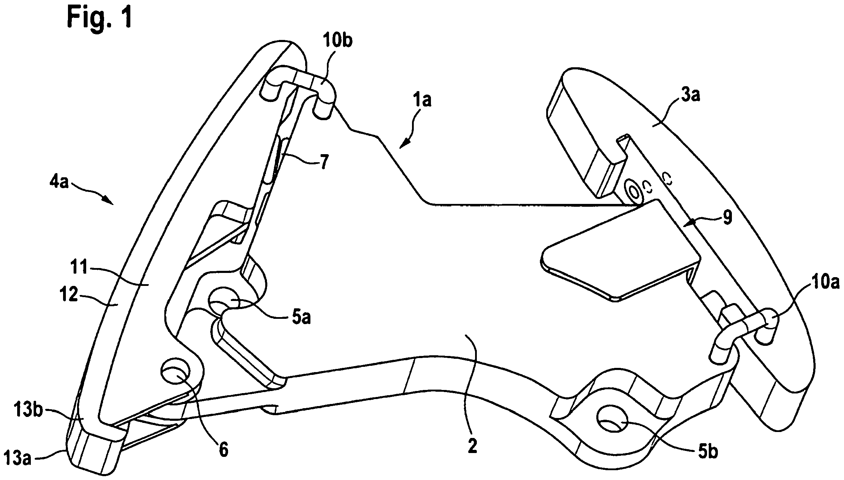

Gemäß dem Ausführungsbeispiel nach Figur 1, in der eine Führungseinheit 1a in eine Perspektive dargestellt ist, umfasst diese im wesentlichen die Bauteile, ein Gehäuse 2, an dem ein Spannelement 3a sowie ein Führungselement 4a beweglich angeordnet sind. Die eine Baueinheit bildende Führungseinheit 1 a kann mittels Verschraubungen, die in Bohrungen 5a, 5b eingesetzt sind, beispielsweise an einer in Figur 1 nicht dargestellten Brennkraftmaschine lösbar befestigt werden. Das Führungselement 4a ist dabei über eine Drehachse 6 schwenkbar mit dem Gehäuse 2 verbunden. In einem axialen Abstand zu der Drehachse 6 ist zwischen dem Gehäuse 2 und dem Führungselement 4a ein als Schraubendruckfeder 7 ausgelegtes Kraftmittel eingesetzt, das in Betriebszustand der Führungseinheit 1a eine kraftschlüssige Abstützung des Führungselementes 4a an einem in Figur 3 abgebildeten Zugmittel sicherstellt.

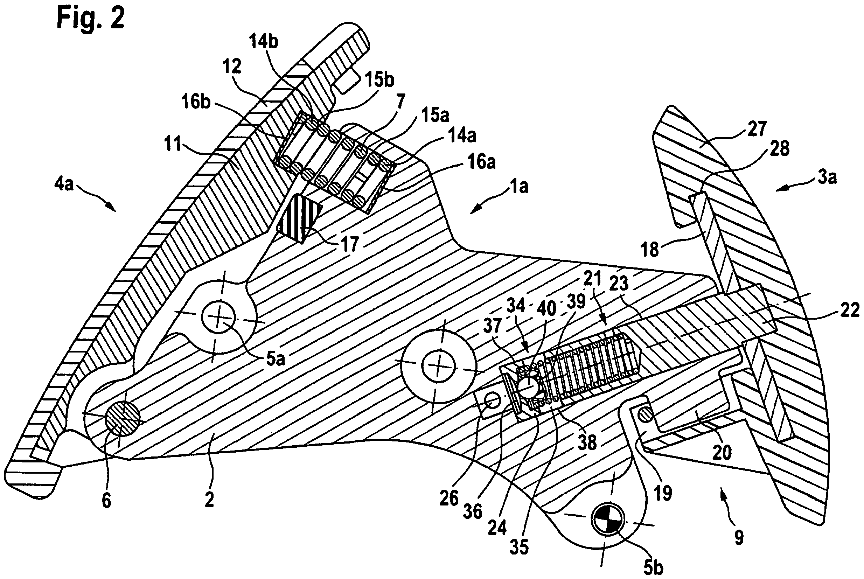

Das Spannelement 3a ist über eine Linearführung 9 gegenüber dem Gehäuse 2 verstellbar. Zur Erzielung einer kraftschlüssigen Anlage des Spannelementes 3a an dem Zugmittel ist zwischen dem Gehäuse 2 und dem Spannelement 3a ein in Figur 2 detailliert dargestelltes Kraftmittel vorgesehen. Übereinstimmend ist das Spannelement 3a sowie das Führungselement 4a in Figur 1 in einer Transportstellung oder Montagestellung dargestellt, in der diese Bauteile bis auf ein geringes Abstandsmaß an dem Gehäuse 2 anliegen. Dazu wird diese Position mittels einer Verliersicherung 10a, 10b gehalten, die nach Einbau der Führungseinheit 1a und erfolgter Montage des Zugmittels 3 entfernt wird, damit das Spannelement 3a sowie das Führungselement 4a aufgrund der zugehörigen Kraftmittel sich in Richtung des Zugmittels verschwenken oder verschieben. Das Führungselement 4a besitzt einen zweiteiligen Aufbau, bestehend aus einem Träger 11, an dem außenseitig ein Führungsschuh 12 formschlüssig lagefixiert ist. Beidseitig ist der Führungsschuh 12 mit Borden 13a, 13b versehen. Die sich über die gesamte Länge des Führungsschuhs 12 erstreckenden Borde 13a, 13b bewirken eine sichere Führung des Zugmittels an dem Führungselement 4a.

Die Figur 2 verdeutlicht einzelne Details der Führungseinheit 1a gemäß Figur 1. Die zur Beaufschlagung des Führungselementes 4a vorgesehenen zylindrische Schraubendruckfeder 7 ist mit einem Federende 14a in einer Bohrung 15a des Gehäuses 2 und mit dem weiteren Federende 14b in die korrespondierende Bohrung 15b des Führungselementes 4a eingesetzt. Zur Verringerung einer Flächenpressung im Bereich einer kreisringförmigen Abstützfläche beider Federenten 14a, 14b insbesondere für ein aus Aluminium oder Kunststoff hergestelltes Gehäuse 2 bzw. Führungselement 4a oder Spannelement 3a, ist jedem Federende 14a, 14b eine Stahlscheibe 16a, 16b zugeordnet. Ein zwischen dem Gehäuse 2 und dem Führungselement 4 positionierter elastischer Endanschlag 17 hat die Aufgabe, dass eine direkte Anlage des Führungselementes 4a an dem Gehäuse 2 unterbunden wird. Der elastische Endanschlag 17 vermeidet damit eine nachteilige Geräuschentwicklung, die beispielsweise bei einem durch Schwingungen des Zugmittels ausgelösten Schwenkbewegungen des Führungselementes 4a verursacht wird.

Die Linearführung 9 ermöglicht eine geradlinige Verschiebung des Spannelementes 3a gegenüber dem Gehäuse 2. Dazu ist an einem Gleitschuh 27 des Spannelementes 3a ein geradliniger Ansatz 19 vorgesehen, der formschlüssig in eine U-förmig gestaltete, zwei axial beabstandete Wandungen einschließende Aufnahme 20 eingreift und darin verschiebbar geführt ist. Zur Kraftbeaufschlagung des Spannelementes 3a ist axial versetzt zu der Linearführung 9 ein als hydraulisches Stellglied 21 ausgeführtes Kraftmittel vorgesehen. Der Aufbau des hydraulischen Stellgliedes 21 umfasst einen mit dem Träger 18 des Spannelementes 3a verbundenen, in einer Passbohrung 23 des Gehäuses 2 verschiebbaren Kolben 22. Zwischen einem Boden 24 der Passbohrung 23 und dem Kolben 22 ist eine Druckfeder eingesetzt, die im Betriebszustand eine in Richtung des Zugmittels gerichtete Kraft auf das Spannelement 3a ausübt. Weiterhin wird der Kolben 22 von einem Druckmittel beaufschlagt. Zur Beaufschlagung des Kolbens 22 mit einem Druckmittel ist die Passbohrung 23 über eine Stichbohrung 26, beispielsweise mit einer Ölgalerie der Brennkraftmaschine verbunden. Dieser Aufbau ermöglicht eine Beaufschlagung des Kolbens 22 mit einem Hydraulikfluid, der Druckumlaufschmierung der Brennkraftmaschine, zur kraftschlüssigen Beaufschlagung des Spannelementes 3a. Zur Druckbeeinflussung bietet sich die Verwendung eine Blende oder eines Druckbegrenzungsventils an, die bzw. das beispielsweise im Bereich der Stichbohrung 26 eingesetzt ist. Vergleichbar dem Führungselement 4a ist das Spannelement 3a mit einem beispielsweise aus Kunststoff hergestellten Gleitschuh 27 versehen, der im Betriebszustand innenseitig an dem Zugmittel anliegt. Zur Befestigung des Gleitschuhs 27 weist dieser eine Aufnahme 28 auf in die der Träger 18 formschlüssig eingesetzt ist.

Alternativ bietet sich an, als Kraftmittel ein hydraulisch wirkendes Stellglied oder Stellzylinder einzusetzen, bestehend aus dem hydraulisch beaufschlagten, mit dem Spannelement 3a verbundenen Kolben 22. Eine Ansteuerung des Stellgliedes erfolgt dabei von dem Öldruck der Brennkraftmaschine. Die Funktion des Stellgliedes verbessernd, schließt dieses ein zwischen einem hydraulischen Hochdruck- und einem Vorratsraum angeordnetes Einwegventil 34 ein. Durch diese Maßnahme ist eine gewünschte gedämpfte Anlenkung des mit dem Kolben 22 verbundenen Spannelementes 3a erzielbar. Zur Verstellung des Kolbens 22 strömt das Hydraulikfluid von dem Hochdruckraum 35 über das Einwegventil 34 in den Vorratsraum 36. Ein umgekehrter, verzögerter Volumenaustausch von dem Hochdruckraum 35 in den Vorratsraum 36 erfolgt über einen Leckspalt 37, der sich zwischen einer Innenwand 38 der Passbohrung 23 und dem Einwegventil 34 einstellt. Das Einwegventil 34 umfasst eine von einer Feder 39 beaufschlagte Kugel 40, die in der ersten Strömungsrichtung einen Querschnitt schließt und in der umgekehrten Richtung den Querschnitt öffnet.

### Bezugszahlenliste

- 1 a: Führungseinheit
- 2: Gehäuse
- 3 a: Spannelement
- 4 a: Führungselement
- 5 a: Bohrung
- 6: Drehachse
- 7: Schraubendruckfeder
- 9: Linearführung
- 10 a: Verliersicherung
- 10 b: Verliersicherung
- 11: Träger
- 12: Führungsschuh
- 13 a: Board
- 13 b: Board
- 14 a: Federnde
- 14 b: Federnde
- 15 a: Bohrung
- 15 b: Bohrung
- 16 a: Stahlscheibe
- 16 b: Stahlscheibe
- 17: Endanschlag
- 18: Träger
- 19: Ansatz
- 20: Aufnahme
- 21: Stellglied
- 22: Kolben

- 23: Passbohrung
- 24: Boden
- 26: Stichbohrung
- 27: Gleitschuh
- 28: Aufnahme
- 34: Einwegventil
- 35: Hochdruckraum
- 36: Vorratsraum
- 37: Leckspalt
- 38: Innenwand
- 39: Feder
- 40: Kugel

## Patentansprüche

1. Führungseinheit für einen Zugmitteltrieb, insbesondere Kettentrieb einer Brennkraftmaschine, der zumindest ein antreibendes Rad sowie zumindest ein angetriebenes Rad umfasst, die über ein Zugmittel verbunden sind, dabei steht die Führungseinheit (1 a) mit kraftbeaufschlagten Bauteilen an zumindest zwei voneinander getrennten Bereichen mit dem Zugmittel in einer Wirkverbindung, wobei
- die Führungseinheit (1 a) zumindest ein Spannelement (3a) und zumindest ein Führungselement (4a) einschließt, die über ein gemeinsames Gehäuse (2) verbunden sind;
- das Führungselement (1a) und das Spannelement (3a) getrennten Trums des Zugmitteltriebs zugeordnet sind;
- das Spannelement (3a) und das Führungselement (4a) im Betriebszustand innenseitig an dem Zugmittel abgestützt sind;
- eine getrennte Verstellung von dem Führungselement (4a) und dem Spannelement (3a) erfolgt;
- sowohl das Führungselement (4a) als auch das Spannelement (3a) von getrennten, mit dem Gehäuse (2) in Verbindung stehenden Federmitteln bzw. Kraftmitteln kraftbeaufschlagt wird;
- das Führungselement (4a) mit der Kraft einer zylindrischen Schraubendruckfeder (7) beaufschlagt wird, während das Spannelement (3a) mit einem als hydraulisches Stellglied (21) ausgeführten Kraftmittel beaufschlagt wird,
**dadurch gekennzeichnet, dass**
- das Führungselement (4a) über eine Drehachse (6) schwenkbar mit dem Gehäuse (2) verbunden ist und in einem axialen Abstand zu der Drehachse zwischen dem Gehäuse und dem Führungselement (4a) die Schraubenfeder eingesetzt ist, die in Betriebszustand der Führungseinheit (1a) eine kraftschlüssige Abstützung des Führungselementes (4a) an dem Zugmittel sicherstellt und das Spannelement (3a) über eine Linearführung (9) gegenüber dem Gehäuse (2) verstellbar ist.

2. Führungseinheit nach Anspruch 1, bei dem die Bauteile, das Gehäuse (2), das Spannelement (3a) und das Führungselement (4a) aus Aluminium hergestellt sind.

3. Führungseinheit nach Anspruch 1, bei dem das Spannelement (3a) und / oder das Führungselement (4a) mit einem aus Kunststoff hergestellten Führungsschuh (12) oder Gleitschuh (27) bestückt ist.

4. Führungseinheit nach Anspruch 1, die aus Kunststoff hergestellte Bauteile wie Gehäuse (2), Spannelement (3a) und Führungselement (4a) umfasst.

5. Führungseinheit nach Anspruch 1, die mehrere Spannelemente (3a) und / oder mehrere Führungselemente (4a) einschließt.

6. Führungseinheit nach Anspruch 1, bei der zur Bildung einer Linearführung (9) in dem Spannelement (3a) ein Stift (19) lagefixiert ist, der mit einer korrespondierenden Bohrung (20) des Gehäuses (2) zusammenwirkt.

7. Führungseinheit nach Anspruch 6, deren Linearführung (9) für das Spannelement (3a) gleichzeitig eine Verdrehsicherung bildet.

8. Führungseinheit nach Anspruch 1, bei dem Federenden (14a, 14b) der Schraubendruckfeder (7) in Bohrungen (15) des Gehäuses (2) bzw. des Führungselementes (4a) zentriert und dabei bevorzugt jeweils über eine Stahlscheibe (16a, 16b) abgestützt sind.

9. Führungseinheit nach Anspruch 1, bei dem zwischen den Spannelement (3a) und / oder Führungselement (4a) einerseits und dem Gehäuse (2) anderseits ein elastischer Endanschlag (17) vorgesehen ist.

10. Führungseinheit nach Anspruch 1, bei dem das Spannelement (3a) und / oder das Führungselement (4a) mittels einer Verliersicherung (10a, 10b) gegenüber dem Gehäuse (2) lagefixiert werden kann.

## Claims

1. Guide unit for a flexible drive, in particular a chain drive of an internal combustion engine, which comprises at least one driving wheel and at least one driven wheel which are connected via a traction mechanism; here, the guide unit (1a) is in an operative connection by way of force-loaded components to the traction mechanism, at at least two regions which are separate from one another,
- the guide unit (1a) including at least one tensioning element (3a) and at least one guide element (4a) which are connected via a common housing (2);
- the guide element (4a) and the tensioning element (3a) being assigned to separate runs of the flexible drive;
- the tensioning element (3a) and the guide element (4a) being supported on the inside on the traction mechanism in the operating state;
- a separate adjustment of the guide element (4a) and the tensioning element (3a) taking place;
- both the guide element (4a) and the tensioning element (3a) being loaded with force by separate force means or spring means which are connected to the housing (2);
- the guide element (4a) being loaded with the force of a cylindrical compression coil spring (7), whereas the tensioning element (3a) is loaded by way of a force means which is embodied as a hydraulic actuator (21),
**characterized in that**
- the guide element (4a) is connected to the housing (2) such that it can be pivoted via a rotational axis (6), and the helical spring is inserted between the housing and the guide element (4a) at an axial spacing from the rotational axis, which helical spring ensures a non-positive support of the guide element (4a) on the traction mechanism in the operating state of the guide unit (1a), and the tensioning element (3a) can be adjusted with respect to the housing (2) via a linear guide (9).

2. Guide unit according to Claim 1, in which the components, the housing (2), the tensioning element (3a) and the guide element (4a) are produced from aluminium.

3. Guide unit according to Claim 1, in which the tensioning element (3a) and/or the guide element (4a) are/is fitted with a sliding pad (27) or guide pad (12) which is produced from plastic.

4. Guide unit according to Claim 1, which comprises components which are produced from plastic such as a housing (2), tensioning element (3a) and guide element (4a).

5. Guide unit according to Claim 1, which includes a plurality of tensioning elements (3a) and/or a plurality of guide elements (4a).

6. Guide unit according to Claim 1, in which a pin (19) is fixed positionally in the tensioning element (3a) in order to form a linear guide (9), which pin (19) interacts with a corresponding hole (20) of the housing (2).

7. Guide unit according to Claim 6, the linear guide (9) of which at the same time forms an anti-rotation safeguard for the tensioning element (3a).

8. Guide unit according to Claim 1, in which spring ends (14a, 14b) of the compression coil spring (7) are centred in holes (15) of the housing (2) and the guide element (4a) and in the process are preferably supported in each case via a steel disc (16a, 16b).

9. Guide unit according to Claim 1, in which an elastic end stop (17) is provided between the tensioning element (3a) and/or guide element (4a) on one side and the housing (2) on the other side.

10. Guide unit according to Claim 1, in which the tensioning element (3a) and/or the guide element (4a) can be fixed positionally with respect to the housing (2) by means of a captive securing means (10a, 10b).

## Revendications

1. Unité de guidage pour un mécanisme de traction, en particulier une transmission par chaîne d'un moteur à combustion interne, qui comprend au moins une roue menante ainsi qu'au moins une roue menée, qui sont reliées par un moyen de traction, l'unité de guidage (1a) se trouve en l'occurrence en liaison active avec le moyen de traction avec des composants soumis à des forces sur au moins deux zones séparées l'une de l'autre, dans laquelle
- l'unité de guidage (1a) comprend au moins un élément de serrage (3a) et au moins un élément de guidage (4a), qui sont reliés l'un à l'autre par un boîtier commun (2);
- l'élément de guidage (4a) et l'élément de serrage (3a) sont associés à des brins séparés du mécanisme de traction;
- l'élément de serrage (3a) et l'élément de guidage (4a) sont appuyés intérieurement sur le moyen de traction dans l'état de fonctionnement;
- il se produit un déplacement séparé de l'élément de guidage (4a) et de l'élément de serrage (3a);
- aussi bien l'élément de guidage (4a) que l'élément de serrage (3a) est soumis à une force par des éléments de force ou des éléments de ressort séparés se trouvant en liaison avec le boîtier (2);
- l'élément de guidage (4a) est soumis à la force d'un ressort hélicoïdal de compression cylindrique (7), tandis que l'élément de serrage (3a) est sollicité par un moyen de force constitué par un organe de réglage hydraulique (21),
**caractérisée en ce que**
- l'élément de guidage (4a) est relié au boîtier (2) de façon pivotante au moyen d'un axe de rotation (6) et le ressort hélicoïdal est introduit entre le boîtier et l'élément de guidage (4a) à une distance axiale de l'axe de rotation, ressort qui, dans l'état de fonctionnement de l'unité de guidage (1a), assure un appui par complémentarité de force de l'élément de guidage (4a) sur le moyen de traction, et l'élément de serrage (3a) peut être déplacé par rapport au boîtier (2) au moyen d'un guidage linéaire (9).

2. Unité de guidage selon la revendication 1, dans laquelle les composants, le boîtier (2), l'élément de serrage (3a) et l'élément de guidage (4a) sont fabriqués en aluminium.

3. Unité de guidage selon la revendication 1, dans laquelle l'élément de serrage (3a) et/ou l'élément de guidage (4a) est muni d'un sabot de guidage (12) ou d'un sabot de glissement (27) fabriqué en matière plastique.

4. Unité de guidage selon la revendication 1, qui comprend les composants fabriqués en matière plastique, comme le boîtier (2), l'élément de serrage (3a) et l'élément de guidage (4a).

5. Unité de guidage selon la revendication 1, qui comprend plusieurs éléments de serrage (3a) et/ou plusieurs éléments de guidage (4a).

6. Unité de guidage selon la revendication 1, dans laquelle il se trouve, pour la formation d'un guidage linéaire (9) dans l'élément de serrage (3a), une tige (19) en position fixe, qui coopère avec un alésage correspondant (20) du boîtier (2).

7. Unité de guidage selon la revendication 6, dont le guidage linéaire (9) forme en même temps un blocage contre la rotation pour l'élément de serrage (3a).

8. Unité de guidage selon la revendication 1, dans laquelle des extrémités de ressort (14a, 14b) du ressort hélicoïdal de compression (7) sont centrées dans des alésages (15) du boîtier (2) ou de l'élément de guidage (4a) et sont en l'occurrence supportées de préférence chaque fois par une rondelle en acier (16a, 16b).

9. Unité de guidage selon la revendication 1, dans laquelle il est prévu entre l'élément de serrage (3a) et/ou l'élément de guidage (4a) d'une part et le boîtier (2) d'autre part une butée d'extrémité élastique (17).

10. Unité de guidage selon la revendication 1, dans laquelle l'élément de serrage (3a) et/ou l'élément de guidage (4a) peut être fixé en position au moyen d'une sécurité imperdable (10a, 10b) par rapport au boîtier (2).
